# EUROPÄISCHE PATENTANMELDUNG

(11) **EP 2 703 476 A1**
(43) Veröffentlichungstag der Anmeldung: **05.03.2014**
(21) Anmeldenummer: 13180346.2
(22) Anmeldetag: 14.08.2013
(51) Int. Cl.: C10M 145/34, C10M 145/36, C08G 65/26

(54) **Verwendung von blockcopolymeren Polyalkylenoxiden als Reibminderer in synthetischen Schmierstoffen**

(30) Priorität: 27.08.2012 DE 102012215145
(71) Anmelder: Evonik Industries AG, 45128 Essen (DE)
(72) Erfinder: Haensel, Rene, 46282 Dorsten (DE); Schubert, Frank, 47506 Neukirchen-Vluyn (DE); Schönemann, Kirsten, 45473 Mülheim an der Ruhr (DE); Weinekötter, Birgit, 46049 Oberhausen (DE); Bartels, Thorsten, 67256 Weisenheim (DE); Seidensticker, Peter, 42781 Haan (DE)

(57) **Zusammenfassung**

Die Erfindung betrifft die Verwendung von Blockcopolymeren, enthaltend mindestens einen Block aus aromatischen Oxyalkylengruppen und einen Block aus nichtaromatischen Oxyalkylengruppen als reibungsmindemdes Additiv wie auch Zusammensetzungen und Schmiermittelformulierungen enthaltend die erfindungsgemäßen Blockcopolymere.

## Beschreibung

Die vorliegende Erfindung betrifft die Verwendung von Blockcopolymeren, enthaltend mindestens einen Block aus aromatischen Oxyalkylengruppen und einen Block aus nichtaromatischen Oxyalkylengruppen als reibungsmindemdes Additiv wie auch Zusammensetzungen und Schmiermittelformulierungen enthaltend die erfindungsgemäßen Blockcopolymere.

Damit betrifft die Erfindung die Verwendung von durch Alkoxylierung erhaltenen, blockcopolymeren Polyalkylenoxiden als Reibminderer in synthetischen Ölen wie z.B. Polyalkylenglykolen, welche als Schmierstoffe eingesetzt werden. Die Schmierstoffe können unter anderem in Getrieben, Lagern oder Motoren eingesetzt werden.

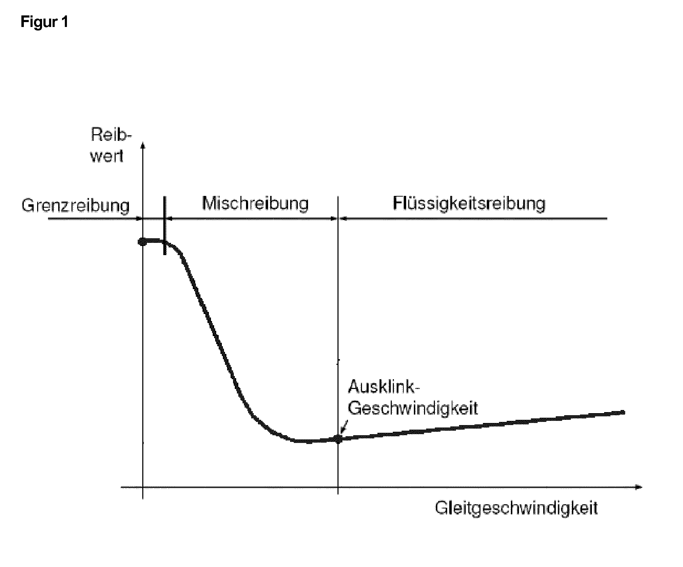

Unter Schmierstoffen werden in dieser Erfindung Flüssigkeiten verstanden, die den unmittelbaren Kontakt von Grund- und Gegenkörper verhindern sollen. Durch Ausbildung eines Schmierfilms zwischen zwei in Relativbewegung befindlichen Oberflächen, wird dadurch die Reibung, die durch die Reibungszahl f gemessen werden kann, reduziert. Die Reibungszahl ist definiert als der Quotient aus der Reibungskraft F_{R} und der Normalkraft F_{N} (Kraft senkrecht zur Fläche). Diese Reibungszahl, auch Reibungskoeffizient oder Traktionskoeffizient genannt, kann z.B. mit Hilfe einer Stribeckkurve (Figur 1) in Abhängigkeit der Geschwindigkeit der sich bewegenden Oberflächen dargestellt werden (Wilfried J. Bartz, Additive für Schmierstoffe, 1994, 68-71). Je nach Bedingungen im tribologischen System entstehen verschiedene Reibungs- und Schmierzustände. Werden an sich ausbildenden Kontaktstellen zwischen zwei Oberflächen, die Moleküle des Schmierstoffs vollständig verdrängt, herrscht Grenzreibung. Die Reibung ist dann sehr hoch, und führt zur Schädigung der Oberflächen. Trennen an den Rauheitshügeln der Oberflächen zumindest einige Moleküle des Schmierstoffs den Grundkörper vom Gegenkörper, so sinkt die Reibung drastisch, dies wird als Mischreibung bezeichnet. Bei der Flüssigkeitsreibung oft auch als hydrodynamische Schmierung bezeichnet, trennt ein Flüssigkeitsfilm die Oberflächen. Bei integraler Betrachtung sind Reibung und Verschleiß im Bereich der Flüssigkeitsreibung am niedrigsten. Eine wichtige Kennzahl ist der sogenannte Ausklinkpunkt, dieser kennzeichnet bei sinkender Geschwindigkeit den Beginn der Mischreibung. Durch geeignete Schmierstoffe sollen Grund- und Gegenkörper möglichst unter Flüssigkeitsreibung betrieben werden. Je niedriger die Viskosität gewählt werden kann, desto energieeffizienter ist dabei das Aggregat, welches z.B. ein Getriebe sein kann.

Im Stand der Technik werden Schmierstoffen Additive zugesetzt, die den Schmierstofffilm möglichst lange, also auch bei hohen angreifenden Kräften F_{N} auf den Gegenkörper, in der Flüssigkeitsreibung halten können. Solche Additive wirken z.B. durch Filmbildung an der Oberfläche der Metallteile, durch physikalische und/oder chemische Adsorption und verhindern den metallischen Kontakt zwischen den Gleitpartnern (Wilfried J. Bartz, Additive für Schmierstoffe, 1994, 53-54).

Synthetische Schmierstoffe im Sinne dieser Erfindung enthalten z.B. Polyalkylenglykole, Esteröle, Adipate. Die Vorteile von synthetischen Schmierstoffen gegenüber mineralölbasierten Schmierstoffen, sind beispielsweise die Möglichkeit der Maßschneiderung von viskosimetrischen Eigenschaften durch gezielte Synthese. Weitere Vorteile sind die oft sehr guten Tieftemperatureigenschaften sowie eine Polarität durch z.B. Ether - oder Estergruppen, die eine Affinität zu Metalloberflächen zur Folge hat, und damit einen intakten Schmierfilm auch unter Belastungen besser gewährleisten kann, als die völlig unpolaren Mineralöle. Wie alle Basisöle auf Mineralölbasis weisen aber auch die synthetischen Schmierstoffe bei zunehmender Belastung oder höherer Temperatur Schwächen im Bereich der Misch- sowie Grenzreibung auf, was sich durch einen höheren Reibungskoeffizienten messen lässt. Eine steigende Temperatur hat eine Abnahme der Viskosität zur Folge. Es gilt bei der Formulierung von Schmierölen einen Kompromiss aus geringer Viskosität und akzeptabler Schmierfilmdicke zu finden.

Schmiermittel sollen einerseits bei hohen Temperaturen ausreichende hohe Viskositäten aufweisen, um nicht abreißende Schmierfilme zu erhalten und um den Verschleiß zu vermindern. Andererseits sind möglichst geringe Viskositäten bei tiefen Temperaturen wünschenswert, um den Energieeinsatz durch Minimierung der Flüssigkeitsreibung zu verringern.

Die Reibung und bei zu hoher Belastung der Verschleiß der Reibpartner wird durch Zusatz üblicher Schmierstoffadditive zu den Basisölen gemindert. Die Kombination aus Basisöl und Additiven ergibt den Schmierstoff. Da für die Schmierstoffe die Viskosität eine entscheidendes Kriterium ist, erfolgt die Einteilung für Schmierstoffe in so genannte ISO -VG - Klassen (Viskositätsklasse nach DIN 51519). Dabei ist die Angabe der Viskosität, die kinematische Viskosität bei 40°C. Die Bezeichnung ISO - VG 320 bedeutet somit, dass der Schmierstoff bei 40°C eine Viskosität von 320 mm²/s hat. Additive, die als Reibminderer oder zum Verschleißschutz eingesetzt werden sind z.B. Fettsäurester, Phosphorsäureester, Triarylphosphate, oder Schwefelverbindungen wie organische Polysulfide, Thioester, Thiadiazole. Häufig werden auch sogenannte Additivpakete eingesetzt, die neben den Verschleißschutzadditiven z.B. noch Korrosionsinhibitoren häufig auf Aminbasis enthalten. Nachteile des Standes der Technik ist, dass insbesondere bei Temperaturen >70°C, wie sie im Schmierspalt häufig vorkommen, zu der schon erwähnten Reduzierung der Viskosität kommt und der Schmierfilm ausbricht, was ein Berühren und damit Verschleiß der zumeist metallischen Oberflächen zur Folge hat.

Gegenwärtige Additive wirken bei hohen Temperaturen insbesondere in synthetischen Ölen nur unzureichend, weil handelsübliche Additive für den Einsatz in mineralölbasierten Basisölen konzipiert wurden. Ein weiterer Nachteil dieser schlecht angepassten Kombinationen aus Additiv und Basisöl ist, dass das tribologische System schon unter milden Bedingungen in das Mischreibungsgebiet gelangt, was die Reibung extrem anwachsen lässt. Bisherige Gegenmaßnahmen sind der Einsatz höher viskoser Öle, um z.B. die Schmierfilmdicke und damit die Tragfähigkeit zu erhöhen, dies hat aber eine schlechtere Energieeffizient zur Folge. Ferner enthalten viele dieser Reibminderer ökologisch bedenkliche Zusätze wie Schwefelverbindungen.

Aufgabe der vorliegenden Erfindung ist daher die Überwindung zumindest eines Nachteils des Standes der Technik.

Überraschenderweise sind Blockcopolymere, die einem der Ansprüche der vorliegenden Erfindung genügen, in der Lage diese Aufgabe zu lösen.

Gegenstand der vorliegenden Erfindung ist daher die Verwendung von Blockcopolymeren, enthaltend mindestens einen Block aus aromatischen Oxyalkylengruppen und einen Block aus nichtaromatischen Oxyalkylengruppen als reibungsmindemdes Additiv.

Ein weiterer Gegenstand der vorliegenden Erfindung sind Zusammensetzungen, die mindestens ein Blockcopolymer enthalten, welches mindestens einen Block aus aromatischen Oxyalkylengruppen und einen Block aus nichtaromatischen Oxyalkylengruppen enthalten, gemeinsam mit mindestens einem Antioxidans.

Ein weiterer Gegenstand sind Schmierstoffformulierungen enthaltend Blockcopolymere, die einen Block aus aromatischen Oxyalkylengruppen und einen Block aus nichtaromatischen Oxyalkylengruppen enthalten in einem synthetischen Basisöl oder synthetischen Schmierstoff.

Bevorzugt enthalten die verwendungsgemäßen Blockcopolymeren einen Block aus aromatischen Oxyalkylengruppen mit mehr als einer, bevorzugt 2 bis 9, mehr bevorzugt 2 bis 8, insbesondere bevorzugt größer 2 bis kleiner 4 aromatischen Oxyalkylengruppen. Weiterhin bevorzugt enthalten die verwendungsgemäßen Blockcopolymeren einen Block aus nichtaromatischen Oxyalkylengruppen mit 2 bis 50, bevorzugt 5 bis 25, insbesondere bevorzugt 8 bis 15 nichtaromatischen Oxyalkylengruppen. Insbesondere bevorzugt enthalten die verwendungsgemäßen Blockcopolymeren einen Block aus aromatischen Oxyalkylengruppen mit mehr als einer aromatischen Oxyalkylengruppe und mindestens einen Block nichtaromatischer Oxyalkylengruppen mit mehr als 2 nichtaromatischen Oxyalkylengruppen.

Weiterhin bevorzugt ist die Verwendung von Blockcopolymeren der Formel (1).

R¹[O(AO)g (NAO)ₕR²]ₙ Formel (1)

wobei
- n: gleich 1 bis 8, bevorzugt 1 bis 4, mehr bevorzugt 1 bis 2, insbesondere 1
- g: größer oder gleich 1 bis 9, bevorzugt 2 bis 8, insbesondere bevorzugt größer 2 bis kleiner 4,
- h: größer oder gleich 3 bis 50, bevorzugt 4 bis 20, insbesondere 5 bis 13
- R¹: unabhängig voneinander ein geradkettiger oder verzweigter oder cycloaliphatischer Kohlenwasserstoffrest mit 1 bis 18 Kohlenstoffatomen, bevorzugt 2 bis 14, mehr bevorzugt 3 bis 10, insbesondere 8 Kohlenstoffatomen,
- R²: unabhängig voneinander Wasserstoff, ein Alkylrest mit 1 bis 8 Kohlenstoffatomen, bevorzugt 1 bis 4 Kohlenstoffatomen, insbesondere Methyl, oder ein Acylrest mit 2 bis 12 Kohlenstoffatomen,
- AO: unabhängig voneinander gleich aromatische Oxyalkylengruppen,
- NAO: unabhängig voneinander gleich nichtaromatische Oxyalkylengruppen,
als reibmindemdes Additiv.

Bevorzugt sind die verwendungsgemäßen Blockcopolymeren, die als aromatische Oxyalkylengruppe mindestens eine oxystyrenehaltige Gruppe enthalten.

Weiterhin bevorzugt sind die nichtaromatischen Oxyalkylengruppen Oxyethylen, Oxypropylen und/oder Oxybutylen.

Weiterhin bevorzugt ist die Verwendung von Blockcopolymeren der Formel (2)

R¹ [O(SO)ₐ(EO)_{b}(PO)_{c}(BO)_{d}R²]ₙ Formel (2)

wobei
- SO: gleich Oxystyrene,
- EO: gleich Oxyethylen,
- PO: gleich Oxypropylen,
- BO: gleich Oxybutylen und
- a: gleich größer 1 bis 9, bevorzugt 2 bis 8, insbesondere bevorzugt größer 2 bis kleiner 4,
- b: gleich 1 bis 20, bevorzugt größer 1 bis 18, mehr bevorzugt 2 bis 15, insbesondere größer 2 bis 13,
- c: gleich 0 bis 20, größer 0 bis 15, mehr bevorzugt 1 bis 10, insbesondere größer 1 bis 6,
- d: gleich 0 bis 10, bevorzugt 0 bis 5, mehr bevorzugt 0 bis 2 insbesondere 0 oder 1
sind als reibungsminderndes Additiv.

Bevorzugt ist die erfindungsgemäße Verwendung von Polyalkylenoxiden bei denen die Summe der Indices a, b, c und d gleich oder größer 3 bis 59, bevorzugt 6 bis 35, mehr bevorzugt 10 bis 20 ist. Weiterhin bevorzugt sind Polyalkylenoxide in denen der Anteil an Oxyethylen-Resten mindestens 25 bis 90 mol%, bevorzugt mindestens 30 bis 80 mol%, insbesondere 35 bis 77 mol% einnimmt bezogen auf die Summe der eingesetzten Alkylenoxide.

Für den Fall, dass c und d gleich 0 sind ist der Wert für b größer oder gleich dreimal des Wertes von a.

Besonders bevorzugt sind blockweise Anordnungen, wobei an den Rest R¹ ein Block enthaltend mindestens eine aromatische Oxyalkylengruppe und dann ein Block enthaltend mindestens eine nichtaromatische Oxyalkylengruppe folgt. Insbesondere bevorzugt sind blockweise Anordnungen, in denen an den Rest R¹ ein Block enthaltend im statistischen Mittel 2,8 bis 3,2 Einheiten Oxystyrene folgt.

Die hier wiedergegebenen Indexzahlen und die Wertbereiche der angegebenen Indizes können als Mittelwerte der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für die Formeln (1) und (2).

Die verwendungsgemäßen Alkoxylierungsprodukte der Formel (1) sind vorzugsweise farblose bis gelb-orange Produkte, die klar oder opak sein können.

Im Rahmen dieser Erfindung umfasst der Begriff Polyether sowohl Polyether, Polyetherole, Polyalkylenoxide und auch Polyetheralkohole, die gegebenenfalls synonym zueinander verwendet werden. Dabei ist nicht erforderlich, dass der Ausdruck "poly" damit einhergehen muss, dass es sich um eine Vielzahl von Etherfunktionalitäten oder Alkoholfunktionalitäten im Molekül oder Polymer handelt. Vielmehr wird dadurch nur angedeutet, dass zumindest Wiederholungseinheiten einzelner Monomerbausteine oder aber Zusammensetzungen vorliegen, die eine höhere Molmasse und zudem auch noch eine gewisse Polydispersität aufweisen.

Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 300 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog der OECD- oder REACH-Richtlinien zu genügen scheinen.

Die durch die Indizes b, c und d beschriebenen Oxyalkylengruppen der Formeln (1) und (2) können in der Polymerkette beliebig statistisch verteilt vorliegen. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinanderfolgen können.

Mit den Indices b, c und d kann die Kompatibilität mit dem Basisöl eingestellt werden. Es ist dem Fachmann geläufig, dass die Verbindungen in Form eines Gemisches mit einer im wesentlichen durch statistische Gesetze geregelten Verteilung vorliegen. Durch die verschiedenen Alkylenoxidmonomere und deren Anteil am Gesamtpolymer lässt sich spezifisch die Hydrophobie/Hydrophilie - Balance steuern, und zwar derart, dass die Verträglichkeit in dem jeweiligen Basisöl gezielt angepasst werden kann.

Der Rest R¹ ist der Kohlenwasserstoffrest eines Alkohols, der 1 oder bis zu 8, bevorzugt 1 bis 4, mehr bevorzugt 1 bis 2 und insbesondere 1 Hydroxygruppe aufweist. Der Alkohol der Formel R¹-O-H reagiert beim Start der Polymerisation unter Verlust des endständigen Protons. Bevorzugte Alkohole sind Methanol, Ethanol, 1-Propanol, 2-Propanol, 1-Butanol, 2-Butanol, Cyclopropylmethanol, 1-Pentanol, 2-Methyl-1-butanol, 2-Methyl-2-butanol, 1-Hexanol, 2-Methyl-1-pentanol, 3-Methyl-1-pentanol, 4-Methyl-1-pentanol, 2,2-Dimethyl-1-butanol, 3,3-Dimethyl-1-butanol, 2,3-Dimethyl-1-butanol, 1-Heptanol, 1-Oktanol, 2-Ethyl-1-oktanol. Besonders bevorzugter Alkohol ist 1-Oktanol.

Bevorzugte Reste R² sind Wasserstoff und/oder Alkylreste mit 1 bis 8 Kohlenstoffatomen und/oder Acylreste mit 2 bis 12 Kohlenstoffatomen sein, wobei die Alkyl- und Acylreste linear, verzweigt oder cyclisch sein können. Bevorzugte Alkylreste sind Methyl, Ethyl, n-Propyl oder n-Butyl, besonders bevorzugt ist Methyl. Bevorzugte Acylreste sind Acetyl, Propionyl oder 2-Ethylhexanoyl.

Besonders bevorzugte verwendungsgemäße Blockcopolymere, Oxystyrengruppen haltige Polyalkylenoxide weisen Reste R¹ gleich n-Oktyl und R² gleich Wasserstoff auf.

Insbesondere bevorzugte verwendungsgemäße Blockcopolymere der Formel (2) sind:
a): Octyl-(SO)₃- (EO)₁₀-H
b): Octyl -(SO)₃ -(PO)_{5,5} -(EO)_{5,5}-H
wobei SO, EO und PO die oben genannte Bedeutung haben.

Ohne an diese Theorie gebunden zu sein kann vermutet werden, dass die delokalisierten Elektronen des aromatischen Rings der Oxystyreneinheiten für die Adsorption des Moleküls an der Metalloberfläche Sorge trägt.

Die verwendungsgemäßen Blockcopolymeren können nach den im Stand der Technik bekannten Methoden hergestellt werden. Bevorzugt werden jedoch die unter basischer Katalyse hergestellten Blockcopolymeren verwendet, deren Herstellung prinzipiell in EP1078946 (US 6,552,091) beschrieben sind. Diese Schriften sind vollumfänglich, insbesondere die Herstellungsmethoden, Bestandteil der vorliegenden Erfindung.

In den oben genannten Schriften ist die Bedeutung des Startalkohols (Absatz 30 der US 6,552,091) hervorgehoben. Dieser kann neben den oben genannten Definitionen für R¹ bevorzugt ausgewählt sein aus natürlichen Fettalkoholen oder synthetischen Fettalkoholen. Die natürlichen Fettalkohole sind bevorzugtermaßen ausgewählt aus Mischungen von C₁₆/C₁₈ oder C₁₁/C₁₄-Alkoholen. Besonders bevorzugte natürliche Fettalkohole sind geradkettige sogenannte n-Alkohole. Die synthetischen Fettalkohole sind bevorzugt ausgewählt aus C₉/C₁₁ oder C₁₃/C₁₅-Alkoholen. Besonders bevorzugte synthetische Fettalkohole sind verzweigtkettige Alkohole. Insbesondere bevorzugt sind Alkohole, deren Hydroxygruppe primär also endständig ist.

Bevorzugtermaßen werden die basisch erzeugten Blockcopoymeren erfindungsgemäß verwendet, die mit Hilfe von Säuren neutralisiert wurden. Bevorzugt sind die Säuren organische Säuren. Besonders bevorzugte organische Säuren sind z.B: Ameisensäure, Essigsäure, Propionsäure, Buttersäure, Valeriansäure, Adipinsäure, Oktansäure, 2-Ethyl-Hexansäure, Milchsäure, gamma Hydroxybuttersäure, Äpfelsäure, Citronensäure, Ascorbinsäure, Trifluormethansulfonsäure, Benzoesäure und der hydroxygruppen haltigen Derivate wie z.B. para Hydroxybenzoesäure und Salicylsäure. Insbesondere bevorzugt ist die erfindungsgemäße Verwendung von Blockcopolymeren, die nicht mit Hilfe anorganischer Säuren neutralisiert wurden, insbesondere nicht mit anorganischen Säuren wie Halogenwasserstoffsäuren wie z.B. HCl, Phosphorsäuren oder Phophonsäuren wie z.B. H₃PO₄, Ethylphosphonsäure, Schwefelsäure oder Sulfonsäuren wie z.B. H₂SO₄, Methylsulfonsäure, Ethylsulfonsäure. Dem Fachmann sind analoge anorganische Säuren mit anderen Oxidationsstufen der Säurezentralatome bekannt wie z.B. Phosphinsäuren.

Die verwendungsgemäßen Blockcopolymere enthalten bevorzugtermaßen Metallionen.

Bevorzugte Metallionen sind die der Gruppe der Alkalimetalle und der Erdalkalimetalle, besonders bevorzugte Ionen sind die des Natriums, Kaliums und Calciums, insbesondere des Kaliums.

Die enthaltenen Metallionen können aus der Polymerisationsreaktion bzw. der Neutralisation mit einer Säure bei der Herstellung der verwendungsgemäßen Blockcopolymere unter Salzbildung stammen, sie können aber auch nachträglich in Form von Salzen zugesetzt worden sein. Bevorzugte Salze sind die Alkali- oder Erdalkalisalze der oben bereits zitierten Säuren. Besonders bevorzugt sind die Salze der Milchsäure, insbesondere Natrium-, Kalium- oder Calciumlactat, speziell bevorzugt ist Kaliumlactat.

Bevorzugt enthalten die verwendungsgemäßen Blockcopolymere mindestens 500 ppm Metallionen, bevorzugt mehr als 1500 ppm, mehr bevorzugt mehr als 2500 ppm, insbesondere bevorzugt mehr oder gleich 3000 ppm bezogen auf die Masse der Blockcopolymeren.

Neben den oben genannten Metallionen können weitere Metall-, Halbmetall-, Übergangsmetall-oder Edelmetallionen enthalten sein. Gegebenenfalls können diese weiteren Metallionen auch einen synergistischen Effekt in Bezug auf die Reibminderung ausüben. Gegebenenfalls können diese weiteren Metallionen in einem Gehalt nahe der Nachweisgrenze bezogen auf die Menge der Blockcopolymeren enthalten sein.

Die verwendungsgemäßen Blockcopolymeren können gegebenenfalls einen Überschuss an Säure enthalten. Es können auch unterschiedliche Säuren gleichzeitig oder nacheinander zugegeben worden sein.

Sofern im Umfang dieser Erfindung auf Naturstoffe Bezug genommen wird, z.B. Lactat, oder chirale Verbindungen z.B. Ethylhexansäure, sind grundsätzlich alle Stereoisomeren damit gemeint, bevorzugt sind die jeweils in der Natur vorkommenden Isomere, im hier genannte Falle des Lactats also das L-Lactat. Zur Definition von Naturstoffen wird auf den Umfang des "Dictionary of Natural Products", Chapman and Hall/CRC Prss, Taylor and Francis Group, z.B. in der online Ausführung von 2011: http://dnp.chemnetbase.com/.

Insbesondere bevorzugte verwendungsgemäße Blockcopolymere der Formel (2) sind die der Strukturen a) und b), bei deren Herstellung Milchsäure verwendet wurde.

Endständig veretherte Polyalkylenoxide können z.B. unter den Bedingungen der Williamsonschen Ethersynthese dem Stand der Technik entsprechend durch Reaktion der hydroxylterminierten Polyether mit aliphatischen, geradkettigen oder verzweigten Alkylhalogeniden erhalten werden. Bevorzugt ist die Reaktion mit Methylchlorid. Auf diese Weise lassen sich die Hydroxylendgruppen sowohl teilweise als auch vollständig verethern.

Endständig veresterte Verbindungen können nach Stand der Technik durch Umsetzung der hydroxylterminierten Polyether mit Carbonsäuren und/oder Carbonsäureanhydriden und/oder Carbonsäurehalogeniden, gegebenenfalls unter Zugabe von Katalysatoren gewonnen werden. bevorzugt sind die Ester der Essigsäure oder der 2-Ethyl-Hexansäure. Auf diese Weise lassen sich die Hydroxylendgruppen sowohl teilweise als auch vollständig verestern.

Ein weiterer Gegenstand der vorliegenden Erfindung sind Zusammensetzungen als reibungsmindemdes Additiv enthaltend Blockcopolymere der Formeln (1) oder (2), die einen Block aus aromatischen Oxyalkylengruppen und einen Block aus nichtaromatischen Oxyalkylengruppen enthalten, gemeinsam mit mindestens einem Antioxidanz.

Bevorzugt sind erfindungsgemäße Zusammensetzungen die mindestens 500 ppm Metallionen, bevorzugt mehr als 1500 ppm, mehr bevorzugt mehr als 2500 ppm, insbesondere bevorzugt mehr oder gleich 3000 ppm bezogen auf die Masse des eingesetzten Blockcopolymers. Antioxidantien, auch als Antioxidative bezeichnet, können z.B. Derivate des 2,4-di-tert.-butyl-phenols sein, sowie auch entsprechende Ester wie z.B. Phosphonite oder Phosphite , weitere Antioxidantien können auch Ester der 3-(3,5-di-tert.butyl-4-hydroxyphenyl)-propionsäure sein. Beispiele der Antioxidative sind die der Reihe Irganox® und Irganox® DW (Warenzeichen der BASF: Irganox L 06, Irganox L 57, Irganox L 64, Irganox L 74, Irganox L 101, Irganox L 107, Irganox L 109, Irganox L 115, Irganox L 135, Irganox L 150), der Reihe Irgafos® (Warenzeichen der BASF: z.B. Irgafos 168 (CA RN 31570-04-4), Irgafos 126, Irgafos XP 60, Irgafos XP 30, Irgafos OPH, Irgafos P-EPQ (CA RN 119345-01-0)).

Ein vorteilhafter Gegenstand der Erfindung kann die Verwendung der erfindungsgemäßens Zusammensetzung als reibmindemdes Additiv sein. Bevorzugte erfindungsgemäße Zusammensetzungen enthalten neben Blockcopolymere der Formeln (1) oder (2) und Antioxidantien noch weitere Additiva wie z.B. extrem pressure/antiwear additives (ep/aw Additive), Korrosionsschutzmittel, Biozide, Entschäumer, Dispergieradditive, Metalldeaktivatoren oder Viskositätsindeximprover. Derartige Zusammensetzungen können als Additivpakete bezeichnet werden.

Bevorzugte erfindungsgemäße Schmierstoffformulierungen enthalten synthetische Basisöle oder synthetische Schmierstoffe insbesondere Polyalyklenglykole (PAG) wie z.B. PAG ISO VG 46, Esteröle wie TMP (Trimethylolpropanester) und Adipate wie z.B. TMAS (Trimethyladipat) wie z.B. TMAS ISO VG 32.

Bevorzugte erfindungsgemäße Schmierstoffformulierungen können neben verwendungsgemäßen Blockcopolymeren enthaltend mindestens einen Block aus aromatischen Oxyalkylengruppen und einen Block aus nichtaromatischen Oxyalkylengruppen und dem Basisöl noch andere nach dem Stand der Technik übliche Additive wie Antioxidative, Korrosionsschutzmittel, Entschäumer, Dispergieradditive, Viskositätsindeximprover, Biozide, Metalldeaktivatoren oder extrem pressure/antiwear additives enthalten.

Die weiteren Additiva der erfindungsgemäßen Zusammensetzungen und der erfindungsgemäßen Formulierungen können einen synergistischen Effekt in Bezug auf die reibmindemde Wirkung verursachen. Insbesondere sind synergistische Effekte beim Zusatz von ep/aw Additiven, Metalldeaktivatoren oder Viskositätsindeximprovem zu erwarten.

Extrem pressure/antiwear additives werden auch als ep/aw Additive bezeichnet. Dies können z.B. Phosphate oder Thiophosphate sein.

Bevorzugte erfindungsgemäße Schmiermittelformulierungen enthalten die verwendungsgemäßen Blockcopolymere in einer Konzentration 0,1 - 9 Gewichtsprozent (Gew.-%) zu Basisölen gegeben, bevorzugt ist der Einsatz von 0,3 - 3 Gew.-%, besonders bevorzugt von 0,5-1 Gew.%, bezogen auf die gesamte Schmierstoffformulierung.

Es kann vorteilhaft sein, wenn die erfindungsgemäßen Schmierstoffformulierungen weitere Reibminderer enthalten.

Die Aufnahme der Stribeckkurven kann wie im Stand der Technik beschrieben erfolgen. Im Umfang dieser Erfindung erfolgt die Ermittlung der Abhängigkeit der Traktionswerte von der Geschwindigkeit mit Hilfe einer "mini traction machine" der Firma PCS - Instruments. Die Durchführung der Messungen wird in den Beispielen beschrieben. Die Beispiele werden hiermit vollumfänglich beansprucht. Traktionskoeffizienten unter den aufgeführten Bedingungen von mehr als 0,095 verursachen sichtbare Schäden am Messsystem, der Kugel und/oder der Platte.

Vorteilhafte Schmiermittel zeichnen sich also dadurch aus, dass sie einen reibmindemden Effekt zeigen. Dieser reibmindemde Effekt ist die Absenkung der Stribeckkurven über den in den Figuren dargestellten Bereich gegenüber dem Basisöl als Blindwert. Weiterhin kann ein reibmindemder Effekt dadurch gekennzeichnet sein, dass ein möglichst großer Geschwindigkeitsbereich unterhalb eines Traktionskoeffizienten von 0,095 liegt. Ein ebenfalls vorteilhaftes Kennzeichen eines reibmindemden Effektes kann durch eine niedrigere Ausklinkgeschwidigkeit gegenüber dem entsprechenden Basisöl als Blindwert sein. Insbesondere vorteilhaft sind reibmindemde Effekte gekennzeichnet durch einen flachen Verlauf der Stribeckkurven unterhalb eines Traktionskoeffizienten von 0,095.

Die verwendungsgemäßen Blockcopolymeren, die erfindungsgemäßen Zusammensetzungen, deren Verwendung und die erfindungsgemäßen Schmiermittel werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend oder vorhergehend Gehaltsangaben (ppm oder %) gemacht, so handelt es sich, wenn nicht anders angegeben, um Angaben in Gewichts-% oder Gewichts-ppm. Bei Zusammensetzungen beziehen sich die Gehaltsangaben wenn nicht anders angegeben auf die Gesamtzusammensetzung. Werden nachfolgend Mittelwerte angegeben, so handelt es sich, wenn nicht anders angegeben um Zahlenmittel. Werden Molmassen verwendet, handelt es sich, wenn nicht ausdrücklich anders vermerkt um gewichtsmittlere Molmassen Mw. Werden im Umfang dieser Erfindung Werte für Viskositäten angegeben, handelt es sich falls nicht anders vermerkt um dynamische Viskositäten, die mit dem Fachmann geläufigen Methoden ermittelt werden können. Werden nachfolgend Messwerte angegeben, so wurden diese Messwerte, wenn nicht anders angegeben, bei einem Druck von 1013,25 hPa und einer Temperatur von 25°C ermittelt.

### Beschreibung der Zeichnungen

Figur 1: Schematische Darstellung einer Stribeckkurve. Aufgetragen wird der Traktionskoeffizient oder Reibwert über der Geschwindigkeit.
Figuren 2a und b: Messprinzip der Mini Traction Maschine
Figuren 3 bis 10: Stribeckkurven gemäß Beispiel 3 mit den dort angegebenen Parametern Fn = 30 N, SRR = 50%, Temperaturen 33°C (Rauten), 70°C (Quadrate), 88°C (Dreiecke).

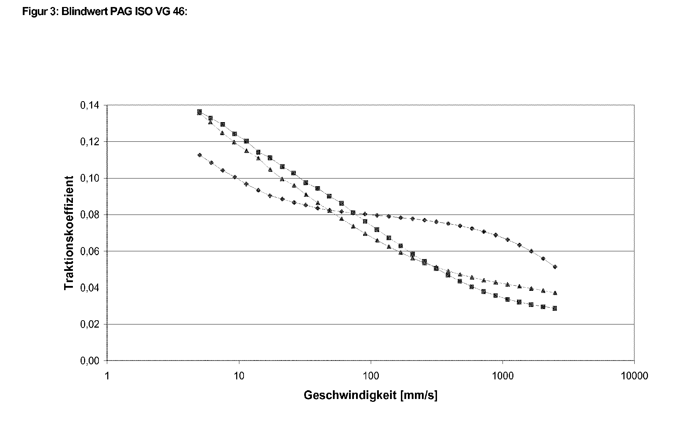

Figur 3: Stribeckkurven des Basisöls ISO VG 46: Polyalkylenglykol der Viskositätklasse ISO VG-46 mit einem Viskositätsindex von 196, ohne Additive, Blindwerte

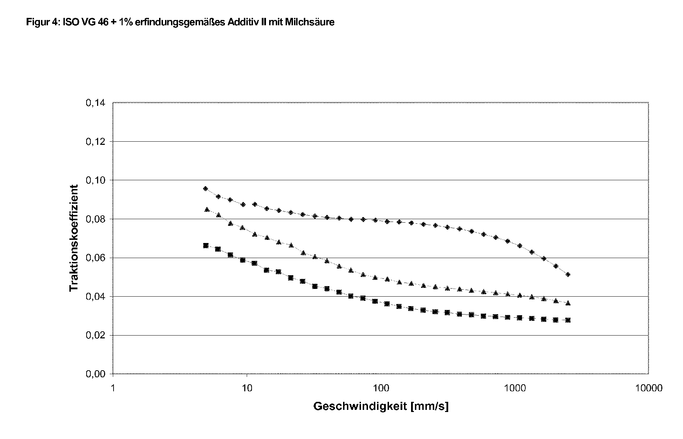

Figur 4: Stribeckkurven der Formulierung SF 6 gemäß Beispiel 2

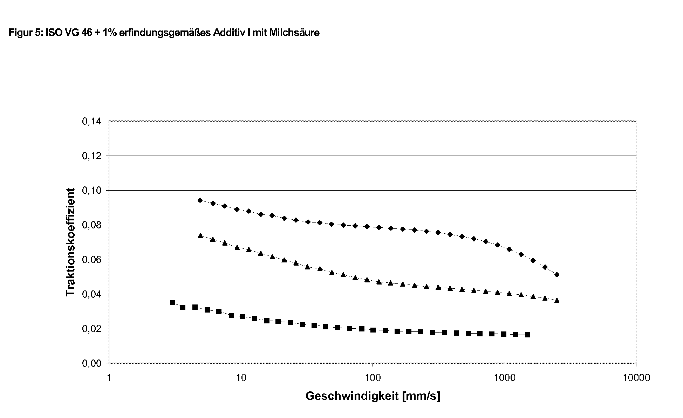

Figur 5: Stribeckkurven der Formulierung SF 1 gemäß Beispiel 2

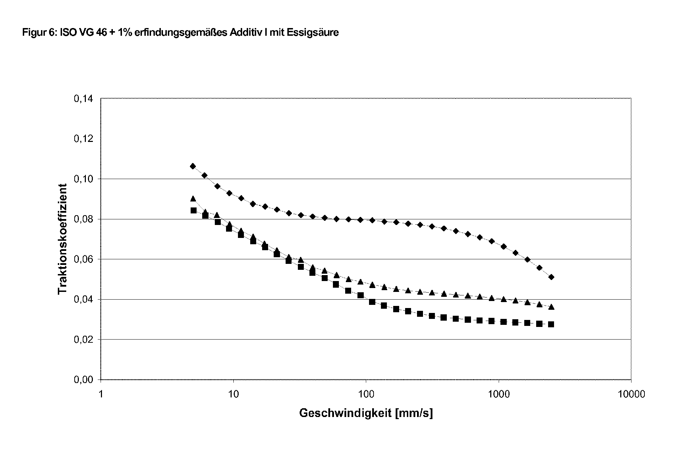

Figur 6: Stribeckkurven der Formulierung SF 4 gemäß Beispiel 2

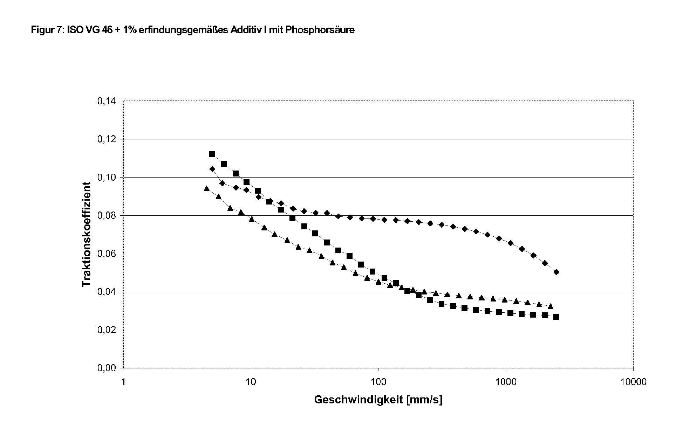

Figur 7: Stribeckkurven der Formulierung SF 5 gemäß Beispiel 2

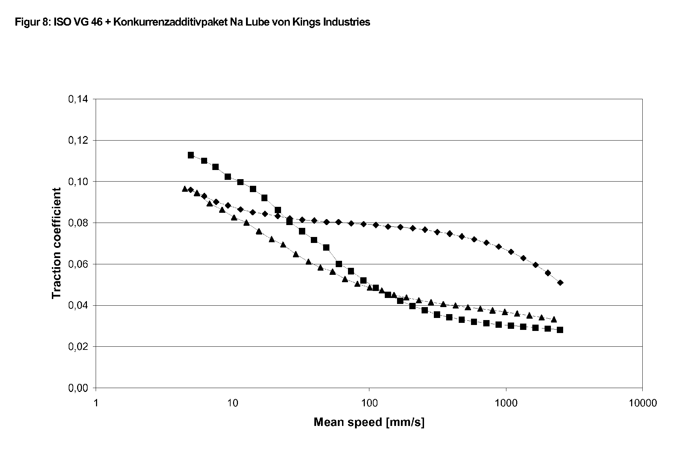

Figur 8: Stribeckkurven der Formulierung SF 3 (nicht erfindungsgemäß) gemäß Beispiel 2

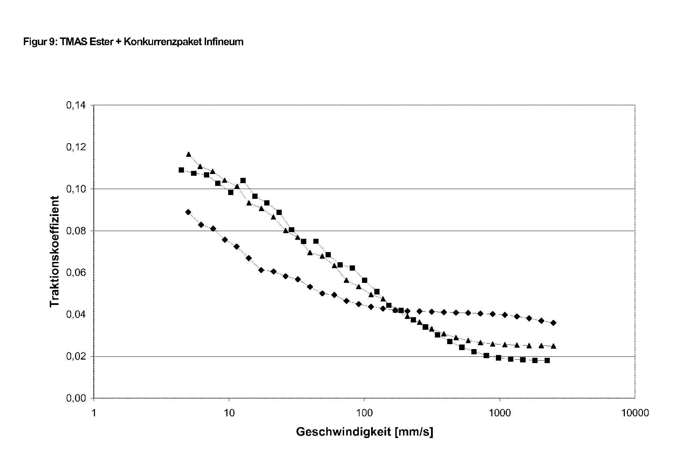

Figur 9: Stribeckkurven des Basisöls ISO VG- 32, TMAS,. Blinwerte

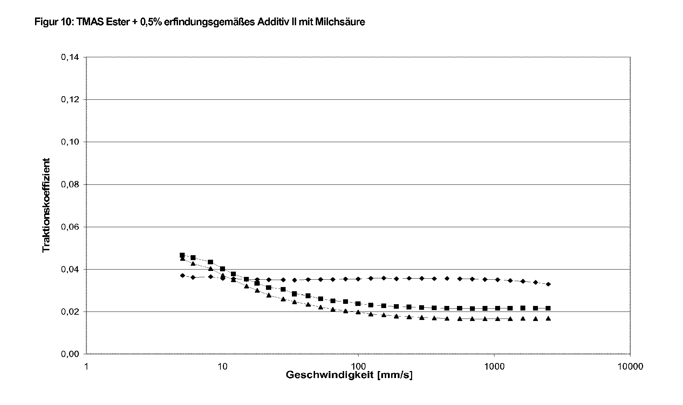

Figur 10: Stribeckkurven der Formulierung SF 2 gemäß Beispiel 2

### Beispiel 1: Synthese der verwendungsgemäßen Polyalkylenoxide:

### S 1a (Herstellung eines Polyethers von Octanol-(SO)₃-(EO)₁₀):

In einem 3 Liter Autoklav wurden 130,2 g 1-Octanol und 5,25 g Kaliummethylat vorgelegt. Der Reaktor wurde durch Evakuieren und Spülen mit Stickstoff inertisiert. Unter Rühren wurde der Reaktorinhalt auf 115 °C erwärmt. 388 g Styroloxid wurden bei 115 °C Innentemperartur innerhalb von einer halben Stunde zugegeben. Nach 2 h Nachreaktionszeit bei 115 °C wurden 473 g Ethylenoxid innerhalb von 2 h kontinuierlich zugegeben. Durch Kühlen wurde dabei die Reaktionstemperatur auf 115 °C gehalten. Der Reaktorinnendruck betrug in dieser Phase maximal 3,5 bar (absolut). Nach 1 h Nachreaktion und weiterhin 115 °C war die Umsetzung beendet, erkennbar am nicht weiter fallenden Innendruck. Der Reaktorinnentemperatur wurde auf 90 °C durch Kühlung gesenkt, anschließend wurden flüchtige Bestandteile durch Entgasen im Vakuum entfernt. Das erhaltene Produkt wurde mit Hilfe von Milchsäure (90 Gew % in Wasser) neutralisiert und das Wasser durch Vakuumdestillation entfernt. Der Polyether wurde abschließend filtriert und abgefüllt. Das Produkt ist eine klare, gelb-orange Flüssigkeit mit einer OH-Zahl von 68,4 mg KOH/g und einer Säurezahl von 0,1 mg KOH/g.

Das Produkt S1b wurde analog zu S1a hergestellt, jedoch mit Essigsäure neutralisiert.

Das Produkt S1c wurde analog zu S1a hergestellt, jedoch mit Phosphorsäure neutralisiert.

### S 2 (Herstellung eines Polyethers von Octanol-(SO)₃-(EO)_{5,5}-(PO)_{5,5}):

In einem 3 Liter Autoklav wurden 130,2 g 1-Octanol und 5,25 g Kaliummethylat vorgelegt. Der Reaktor wird durch Evakuieren und Spülen mit Stickstoff inertisiert. Unter Rühren wurde der Reaktorinhalt auf 115 °C erwärmt. 388 g Styroloxid wurden bei 115 °C Innentemperartur innerhalb von einer halben Stunde zugegeben. Nach 2 h Nachreaktionszeit bei 115 °C wurde eine Mischung aus 261 g Ethylenoxid und 344 g Propylenoxid innerhalb von 135 min kontinuierlich zugegeben. Durch Kühlen wurde dabei die Reaktionstemperatur auf 115 °C gehalten. Der Reaktorinnendruck betrug in dieser Phase maximal 3,5 bar (absolut). Nach 1,5 h Nachreaktion und weiterhin 115 °C war die Umsetzung beendet, erkennbar am nicht weiter fallenden Innendruck. Der Reaktorinnentemperatur wurde auf 90 °C durch Kühlung gesenkt, anschließend wurden flüchtige Bestandteile durch Entgasen im Vakuum entfernt. Das erhaltene Produkt wurde mit Hilfe von Milchsäure (90 Gew % in Wasser) neutralisiert und das Wasser durch Vakuumdestillation entfernt. Der Polyether wurde abschließend filtriert und abgefüllt. Das Produkt ist eine klare gelb-orange Flüssigkeit mit einer OH-Zahl von 64,8 mg KOH/g und einer Säurezahl von 0,2 mg KOH/g.

### Beispiel 2: Schmierstoffformulierungen

Die Formulierungen werden durch einfaches Vermischen bei Raumtemperatur erzeugt.

Als Basisöle werden ein Polyalkylenglykol der Viskositätklasse ISO VG- 46 mit einem Viskositätsindex von 196 (dies wird im Folgenden als Basisöl ISO VGT 46 bezeichnet) sowie ein Trimethyl Adipinsäureester (TMAS) verwendet. Das TMAS ist mit einem Additivpaket enthaltend 4,5 Massen-% eines Viskositätsindeximprovers auf PMA-Basis (eine Polymethacrylat basierte Substanz) und einem ep/aw-Additiv von Infineum mit der Bezeichnung P 666 (im Stand der Technik ist bekannt, dass die Menge an ep/aw-Additiv etwa 0,3 Gew.% beträgt) versetzt, diese Mischung entspricht einem Öl der Viskositätsklasse ISO-VG 32 und hat einen Viskositätsindex von 230.

Zu Vergleichszwecken wurde als kommerzieller Reibminderer Na - Lube AW 6220 (eine Phosphor- und Stickstoffhaltige Additivformulierung für den Einsatz in Industrieschmierstoffen als Reibminderer von King Industries) verwendet.

**Tabelle 1: Schmiermittelformulierungen (SF) gemäß Beispiel 2 unter Verwendung der Blockcoplymeren als Additiv gemäß Beispiel 1**

| Additiv | ISO VG-46 plus 1 Gew.% Additiv | ISO VG-32 plus 0,5 Gew.% Additiv |
|---|---|---|
| S 1a | SF1 | |
| S 1b | SF4 | |
| S 1c | SF5 | |
| S2 | SF6 | SF2 |
| Na-Lube | SF 3 | |

### Beispiel 3: Versuche zur Verwendung

Wenn übereinander gleitende Oberflächen wie z.B. die Zahnflanken von Zahnrädern nicht mehr durch einen Schmierstofffilm getrennt werden, berühren sich die Oberflächen der Gleitpartner. Die Folge ist mechanischer, adhäsiver Verschleiß. Verschleißschutzadditive vermindern dann die Reibung und ein im schlimmsten Fall verschweißen der sich berührenden Flächen durch Bildung von Oberflächenschichten mit geringerer Scherfestigkeit als bei den reinen Metallen. Das erfindungsgemäße Additiv adsorbiert schon unter relativ milden Bedingungen an der Metaloberfläche und unter hohen Belastungen im Mischreibungsgebiet reduziert es gegenüber dem reinem, unadditivierten Basisöl deutlich die Reibung. Diese Wirkungsweise lässt sich in einer Stribeckkurve (Figur 1) abbilden. Die Stribeckkurve bildet den Verlauf der Reibkraft in einem Koordinatensystem ab. Auf der Abszisse ist der Reibungskoeffizient dargestellt, auf der Ordinate die Funktion aus Geschwindigkeit, Druck und Viskosität.

### Aufnahme von Stribeckkurven:

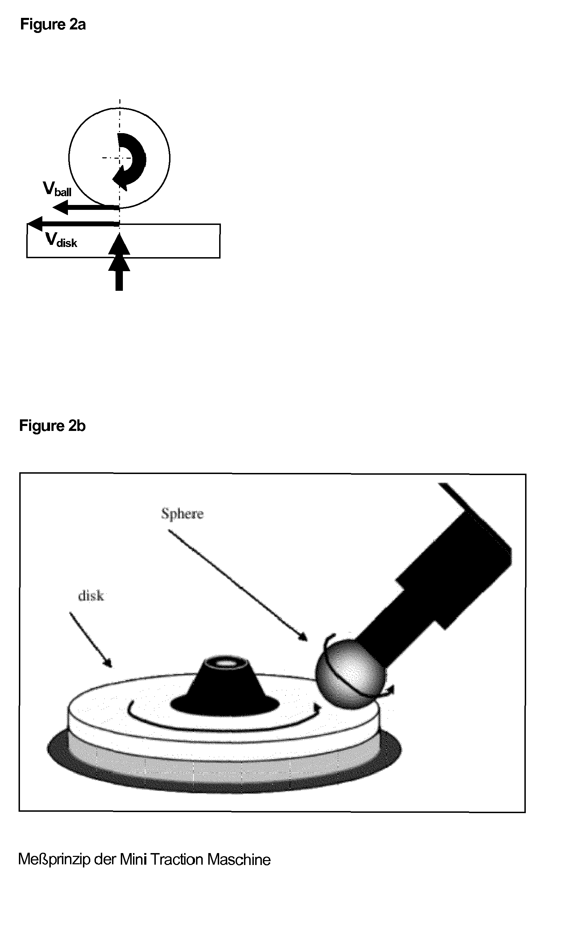

Die Stribeckkurven wurden mit einer Mini Traction Maschine von PCS - Instruments aufgenommen (Messprinzip Figur 2a und 2b). Der tribologische Kontakt ergibt sich durch eine polierte Kugel mit einem Durchmesser von 19,05 mm aus einem chromhaltigen Stahl (100 Cr 6: AlSi 52100, DIN 1.3505) und einer polierten Scheibe mit einem Durchmesser von 46 mm aus dem gleichem Material wie die Kugel. Kugel und Scheibe werden unabhängig voneinander angetrieben und erzeugen so einen gleitenden/rollenden Kontakt. Die Testflüssigkeit wurde in das Testreservoir eingefüllt. Das Programm durchlief automatisch die eingegebenen Belastungen, Geschwindigkeiten, Gleit-Rollverhältnisse und Temperaturen.

Die Stribeckkurve wurde erzeugt mit einer Belastung F_{N} von 30 N, dies entspricht einer Hertzschen Pressung von 0,93 GPa. Die Schmierstofftemperatur wurde auf 33°C, 70°C und 88°C eingestellt. Als festes Gleit - Rollverhältnis (SRR = slide role ratio) wurde 0,5 (50%) eingestellt, dies ist definiert als das Verhältnis von Gleitreibung in %, definiert als (v_{Scheibe}-V_{kugel})/Vₘᵢₜₜₑₗ)*100% (v = Geschwindigkeit) wobei die Geschwindigkeit (mean speed) im Bereich von 2000 mm/s - 5 mm/s variert wurde. Es wurden bei jeder Temperatur 10 Werte aufgenommen, 5 angefangen mit einer niedrigen Geschwindigkeit und 5 angefangen mit einer hohen Geschwidigkeit. Aus den 10 Messwerten wurde der Mittelwert unter Anwendung der Bestimmung des Medians berechnet.

Als Blindwerte wurden die jeweiligen Basisöle ISO VG 46 und ISO VG 32 vermessen.

Die Ausklinkgeschwindigkeiten können graphisch ermittelt werden, indem an den linearen Bereich bei höheren Geschwindigkeiten eine Gerade angelegt wird. Die entsprechenden Geschwindigkeiten können dann den Messwerten entnommen werden.
Auf diese Weise wurden folgende Ausklinkgeschwindigkeiten ermittelt:

**Tabelle 2: Ausklinkgeschwidigkeiten in [mm/s] gemäß Beispiel 3 der Schmierstoffformulierungen gemäß Beispiel 2, unter Verwendung des Basisöls ISO VG 46**

| | Blindwert Figur 3 | SF 6 Figur 4 | SF 1 Figur 5 | SF 4 Figur 6 | SF 5 Figur 7 | SF 3 Figur 8 |
|---|---|---|---|---|---|---|
| 70°C | 500 | 150 | 120 | 150 | 200 | 250 |
| 88°C | >1000 | 250 | 100 | 400 | 400 | 600 |

Ergebnisse des Beispiels 3:

**Tabelle 3: Geschwindigkeiten in [mm/s] bei denen sichtbare Schäden an Scheibe oder Kugel der Mini Traction Machine zu beobachten waren**

| | ISO VG-46 | | | | | | ISO VG-32 | |
|---|---|---|---|---|---|---|---|---|
| | Blindwert | SF 6 | SF 1 | SF 4 | SF 5 | SF 3 | Blindwert | SF 2 |
| 33°C | 11 | <5 | <5 | 8 | 6 | 5 | <5 | <5 |
| 70°C | 26 | <5 | <5 | <5 | <5 | 5 | 13 | <5 |
| 88°C | 33 | <5 | <5 | <5 | 10 | 15 | 15 | <5 |

Der Reibungskoeffizient des Polyalkylenglykols (ISO VG 46) wurde durch Zusatz von 1 Gew.% der verwendungsgemäßen Additive signifikant gesenkt. Im Mischreibungsbereich bei Geschwindigkeiten der Testkörper < 100 mm/s werden bei dem nicht additivierten Öl Reibwerte > 0,1 erreicht, was unter diesen Testbedingungen bereits sichtbare Kratzer auf der Metaloberfläche der Testkörper bedeutet. Besonders bei höherer Temperatur ab 70°C, was übliche Temperaturen an der Kontaktoberfläche in Getrieben sein können, wird die Viskosität so gering, dass schon sehr hohe Reibungskoeffizienten gemessen werden. Diese werden aber signifikant durch die verwendungsgemäßen Additive nach Beispiel 1 (S1a, S1b, S1 c) gesenkt. Das zu Vergleichszwecken eingesetzte kommerzielle Produkt NA-Lube senkt die Reibwerte deutlich weniger ab.

Die erfindungsgemäße Verwendung von Blockcopolymeren, enthaltend einen Block aus aromatischen Oxyalkylengruppen und einen Block aus nichtaromatischen Oxyalkylengruppen als reibungsmindemdes Additiv führt zu einer signifikanten Senkung der Reibungskoeffizienten im Misch - und Grenzreibungsbereich. Damit wird Verschleiß verhindert oder reduziert. Weiterhin erlauben die verwendungsgemäßen Blockcopolymeren Prozesse energieeffizienter durchzuführen. Auch die Verwendung niedrigviskoser Basisöle kann durch die verwendungsgemäßen Blockcopolymeren erweitert werden in den Bereich höherer Belastungen.

## Patentansprüche

1. Verwendung von Blockcopolymeren, enthaltend mindestens einen Block aus aromatischen Oxyalkylengruppen und einen Block aus nichtaromatischen Oxyalkylengruppen als reibungsmindemdes Additiv.

2. Verwendung nach Anspruch 1 **dadurch gekennzeichnet, dass** die Blockcopolymeren mindestens einen Block aromatischer Oxyalkylengruppen mit mehr als einer aromatischen Oxyalkylengruppe und mindestens einen Block nichtaromatischer Oxyalkylengruppen mit mehr als 2 nichtaromatischen Oxyalkylengruppen enthalten.

3. Verwendung nach Anspruch 1 oder 2 **dadurch gekennzeichnet, dass** die Blockcopolymere der Formel (1) verwendet werden
R¹ [O(AO)g (NAO)ₕ R²]ₙ Formel (1)
wobei
n gleich 1 bis 8,
g größer oder gleich 1 bis 9
h größer oder gleich 3 bis 50
R¹ geradkettiger oder verzweigter oder cycloaliphatischer Kohlenwasserstoffrest mit 1 bis 18 Kohlenstoffatomen,
R² Wasserstoff oder ein Alkylrest mit 1 bis 8 Kohlenstoffatomen,
AO unabhängig voneinander gleich aromatische Oxyalkylengruppen,
NAO unabhängig voneinander gleich nichtaromatische Oxyalkylengruppen.

4. Verwendung nach einem der Ansprüche 1 bis 3 **dadurch gekennzeichnet, dass** Blockcopolymere der Formel (2) verwendet werden
R¹ [O(SO)ₐ (EO)_{b} (PO)_{c} (BO)_{d} R²]ₐ₁ Formel (2)
wobei
a1 gleich 1 bis 8,
R¹ geradkettiger oder verzweigter oder cycloaliphatischer Kohlenwasserstoffrest mit 1 bis 15 Kohlenstoffatomen,
R² Wasserstoff oder ein Alkylrest mit 1 bis 8 Kohlenstoffatomen,
SO gleich Oxystyrene,
EO gleich Oxyethylen,
PO gleich Oxypropylen,
BO gleich Oxybutylen und
a gleich 1 bis 9,
b gleich 1 bis 20,
c gleich 0 bis 20,
d gleich 0 bis 10 sind

5. Zusammensetzungen enthaltend mindestens ein Blockcopolymer, enthaltend mindestens einen Block aus aromatischen Oxyalkylengruppen und einen Block aus nichtaromatischen Oxyalkylengruppen gemeinsam mit mindestens einem Antioxidans.

6. Zusammensetzung nach Anspruch 5 **dadurch gekennzeichnet, dass** die Zusammensetzung mindestens 500 ppm Metallionen enthält bezogen auf die Masse der eingesetzten Blockcopolymeren.

7. Verwendung von Blockcopolymeren, enthaltend mindestens einen Block aus aromatischen Oxyalkylengruppen und einen Block aus nichtaromatischen Oxyalkylengruppen nach einem der Ansprüche 1 bis 4 oder der Zusammensetzungen nach einem der Ansprüche 6 oder 7 zur Herstellung von Schmierstoffformulierungen.

8. Schmierstoffformulierungen enthaltend Blockcopolymere, die einen Block aus aromatischen Oxyalkylengruppen und einen Block aus nichtaromatischen Oxyalkylengruppen enthalten in einem synthetischen Basisöl oder synthetischen Schmierstoff.

9. Schmierstoffformulierungen nach Anspruch 8 **dadurch gekennzeichnet, dass** sie weitere Zusätze ausgewählt aus synthetischen Ölen, extrem pressure/antiwear additives (ep/aw Additive), Korrosionsschutzmittel, Biozide, Entschäumer, Dispergieradditive, Metalldeaktivatoren oder Viskositätsindeximprover, enthalten.

10. Schmierstofformulierungen nach einem der Ansprüche 8 oder 9 **dadurch gekennzeichnet, dass** die Blockcopolymeren, in einer Konzentration von 0,1 - 9 Gew.% bezogen auf die gesamte Schmierstoffformulierung verwendet werden.

11. Schmierstofformulierungen nach einem der Ansprüche 8 bis 10 **dadurch gekennzeichnet, dass** die synthetischen Öle Polyalkylenglykole sind.
